# EUROPEAN PATENT SPECIFICATION

(11) **EP 0 365 070 B1**
(45) Date of publication and mention of the grant of the patent: **18.05.1994**
(21) Application number: 89202532.1
(22) Date of filing: 09.10.1989
(51) Int. Cl.: G11B 7/08, G11B 7/22

(54) **Optical scanning unit, optical write and/or read apparatus comprising said unit and a method of manufacturing the scanning unit and the write and/or read apparatus**
Optische Abtasteinheit und eine optische Einschreibe- und/oder Ausleseanordnung mit einer solchen Abtasteinheit sowie Verfahren zum Herstellen der Abtasteinheit und der Einschreibe- und/oder Auslesanordnung
Dispositif de balayage optique et appareil optique pour l'enregistrement et la reproduction avec un tel dispositif, aussi bien qu'un procédé pour la fabrication du dispositif de balayage et de l'appareil pour l'enregistrement et la reproduction

(30) Priority: 13.10.1988 NL 8802514
(43) Date of publication of application: 25.04.1990
(73) Proprietor: Philips Electronics N.V., 5621 BA Eindhoven (NL)
(72) Inventor: Voutmans, Jozef André, NL-5656 AA Eindhoven (NL)
(74) Representative: Schrijnemaekers, Hubert Joannes Maria

(56) References cited:
- EP-A- 0 268 311

## Description

The invention relates to an optical scanning unit for scanning an information track in an optically readable record carrier, which scanning unit comprises a frame and an optical system for focusing a radiation beam produced by a radiation source to form a scanning spot on a record carrier and to image the scanning spot on a radiation-sensitive detection system, which optical system comprises a holder which is movable relative to the frame and which has a central longitudinal axis and an objective lens, which is secured to a supporting surface of the holder and which has an optical axis which extends at least substantially parallel to the beam axis of the radiation beam.

Such a scanning unit is commercially available and is described in United States Patent Specification 4,615,585 (herewith incorporated by reference) and the publication cited therein. In the known scanning unit the holder for the objective lens has a concave cup-shaped supporting surface to which the objective lens is secured. The shape of the supporting surface is adapted to the spherical shape of the lens in such a way that the lens bears on an outer rim of the supporting surface. For a more detailed description of such a lens mounting reference is made to, for example, Netherlands Patent Application 161,265 (herewith incorporated by reference), which has been laid open to public inspection.

Scanning units of the type defined above are used in apparatuses for recording and/or reading an information track in an optically readable record carrier, such as optical audio-disc players, optical video disc players, and optical storage disc apparatuses. In these apparatuses the radiation beam is generated by a laser and is focused by the objective lens to form a radiation spot of very small dimensions at the location of the information plane of the rotating record carrier to be scanned. The minimum dimensions of the radiation spot are dictated inter alia by the wavelength of the laser which is used and the numerical aperture of the objective lens. The scanning spot has a bright central portion surrounded by concentric annular portions of substantially lower intensity. If the centre of the scanning spot is situated on a recording track of the information carrier a part of the radiation will also be incident on the adjacent tracks. Consequently, the reflected radiation comprises not only information corresponding to the recording track to be scanned but also some information corresponding to the adjacent tracks. The reflected radiation is received by radiation-sensitive electronic means in order to detect an electric signal corresponding to the information in the reflected radiation. For this purpose it is important inter alia that the optical axis of the objective lens is in very accurately position relative to the record carrier side facing the objective lens at the location where the radiation beam is incident on the record carrier. The angle of the beam axis to said side of the record carrier is, for example, 90° ± 0.2°. An oblique position of the optical axis relative to the record carrier, in which case the angle between the optical axis of the objective lens and the normal to the record carrier side facing the objective at the location of the point of intersection between the optical axis and the record carrier is too large, gives rise to astigmatism and leads to coma, causing the light intensity at one side of the radiation spot to increase and an irregular radiation spot to be formed, which may give rise to inter alia more crosstalk between adjacent recording tracks.

Moreover, for the scanning unit it is important that the beam axis of the radiation beam coincides with the optical axis of the objective lens with the highest possible accuracy. If this is not the case the intensity distribution within the radiation spot and hence within the radiation beam reflected by the record carrier can be asymmetrical, in particular if the scanning unit is not provided with a separate collimator lens, to such an extent that an undesired intensity distribution over the radiation-sensitive detection system may arise. Since the detection system comprises tracking detectors, the tracking signals detected by the detection system during operation then will not wholly correspond to the position of the radiation spot relative to the information track to be scanned on the record carrier.

As a result of a number of tolerances in the manufacture and assembly of the apparatus of which the scanning unit forms part, the holder for the objective lens usually occupies a specific oblique position relative to the axis of rotation of the rotating record carrier to be scanned. Moreover, as a result of various tolerances the optical axis of the objective lens which is connected to the holder may be slightly offset in a lateral direction relative to the beam axis. Generally the oblique position of the holder can be corrected satisfactorily during manufacture of the prior-art scanning unit by a lateral shift of the objective lens over the concave supporting surface of the holder. However, an offset of said optical axis relative to the longitudinal axis of the holder cannot always be compensated during positioning of the objective lens. It is found that in certain constructions among which the constructions in which the holder is supported by two parallel blade springs secured to the frame, as is disclosed for example in said United States Patent Specification 4,615,558, the longitudinal axis of the holder is disposed at an angle which differs from 90° relative to the record carrier side which faces the objective, the holder itself being tilted about a point which is generally situated at that side of the objective lens which is remote from the record carrier. In such cases, when the objective lens is positioned in known manner in order to provide a correction for the oblique position of the holder, an offset of the optical axis of the objective lens from the longitudinal axis of the holder, will be introduced as a result of which an existing spacing between the optical axis and the longitudinal axis will increase.

It is an object of the invention to provide a scanning unit of the type defined in the opening paragraph, in which during manufacture the objective lens can be positioned in such a way that both the oblique position of the optical axis of the objective lens relative to a reference plane defined by the record carrier to be scanned and the spacing between the beam axis of the radiation beam and the optical axis of the objective lens are minimal if, as a result of tolerance errors in for example the scanning unit, the holder is tilted relative to its correct position about a point situated at the side of the objective lens which is remote from the record carrier.

To this end the scanning unit in accordance with the invention is characterized in that the supporting surface of the holder which faces the objective lens is spherically curved, the centre of curvature being situated at that side of the supporting surface which is remote from the objective lens and being situated at least substantially on said longitudinal axis of the holder. During manufacture of the scanning unit the supporting surface thus formed enables the objective lens to be shifted relative to the holder, which is tilted about a point situated at that side of the objective lens which is remote from the record carrier, in such a way that after positioning of the objective lens the optical axis of the objective lens not only has the desired orientation but also coincides or substantially coincides with the beam axis of the radiation beam.
This enables a scanning unit having a high-quality optical system to be obtained. A preferred embodiment of the scanning unit in accordance with the invention is characterized in that the centre of curvature of the supporting surface is situated at least in the proximity of a virtual tilting point of the holder which is determined with the aid of a reference plane which is related to the record carrier to be scanned. By means of measurements on a representative number of scanning units of the type to which the invention relates it is possible to define a limited range in which most of the tilting points of the assembled obliquely positioned holders will be situated. By situating the centre of curvature of the supporting surface in said range it is possible to provide a statistically optimum correction for the oblique position and axial offset during manufacture. If the holder is supported on the frame by means of two parallel blade springs said range will generally be situated between the blade springs.

The invention further relates to an apparatus for writing and/or reading an information track in an optically readable record carrier, which apparatus comprises a drive spindle for the disc-shaped record carrier and a tracking mechanism. Such an apparatus is known from United States Patent Specification 4,403,316 (herewith incorporated by reference), cited in the afore-mentioned United States Patent Specification 4,615,585. It is an object of the invention to improve the prior-art apparatus by securing the scanning unit in accordance with the invention to the tracking mechanism.

The invention also relates to a method of manufacturing the optical scanning unit in accordance with the invention and a method of manufacturing the apparatus comprising the optical scanning unit in accordance with the invention. In this respect the invention aims at providing methods enabling an objective lens which is positioned as accurately as possible both relative to the record carrier and relative to the beam axis to be obtained in a most efficient way.

In accordance with the invention the method of manufacturing the optical scanning unit, in which the radiation source and the radiation-sensitive detection system are fixedly secured to the frame and the holder for the objective lens is movably secured to the frame, is characterized in that after the holder has been connected to the frame the objective lens is placed on the spherically curved surface, after which the objective lens is shifted over said supporting surface to align said lens relative to a reference plane which is related to the position of the record carrier to be scanned and is subsequently secured by means of an adhesive.

The method in accordance with the invention for manufacturing the apparatus, in which the radiation source and the radiation-sensitive detection system are fixedly secured to the frame of the scanning unit and the holder for the objective lens is movably secured to said frame and in which the frame of the scanning unit is secured to the tracking mechanism which is supported in a chassis of the apparatus, the drive spindle also being supported in said chassis, is characterized in that after the frame of the scanning unit has been connected to the chassis of the apparatus and the holder has been connected to the frame the objective lens is placed on the spherically curved surface, after which the objective lens is shifted over the supporting surface to aligned said lens relative to a reference plane which is related to the position of the record carrier to be scanned and is subsequently secured by means of an adhesive.

Both methods can be used successfully for manufacturing constructions in which the holder for the objective lens is movably secured to the frame of the scanning unit by means of blade springs.

The invention will now be described in more detail, by way of example, with reference to the accompanying drawings. In the drawings:
Fig. 1 is a longitudinal sectional view of an embodiment of the scanning unit in accordance with the invention,
Fig. 2 is a plan view of an apparatus in accordance with the invention comprising the scanning unit shown in Fig. 1, and
Fig. 3 is an underneath view of the apparatus shown in Fig. 2.

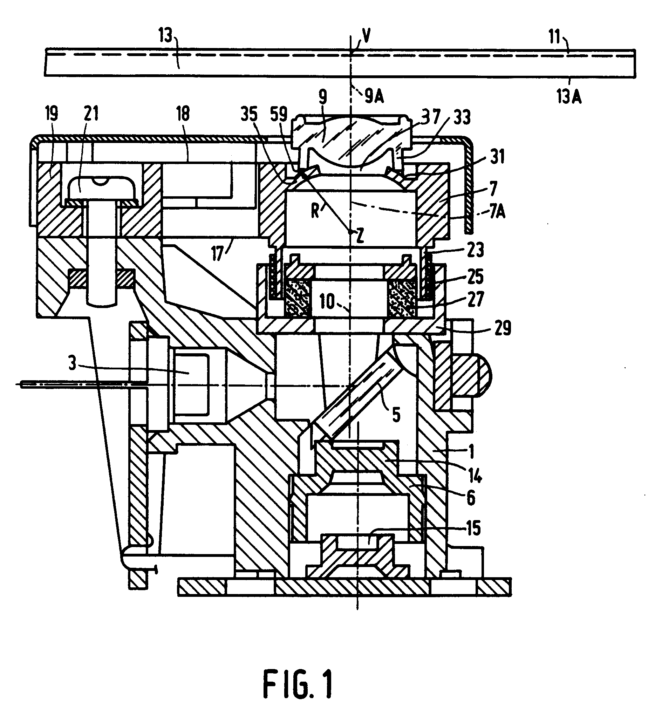

The optical scanning unit in accordance with the invention shown in Fig. 1 can be employed in a disc player of a type intended for inscribing and/or reading optical audio discs, video discs or data discs. The scanning unit comprises a frame 1 and an optical system comprising a radiation source 3, a plane parallel semitransparent plate 5 and a holder 7 with an objective lens 9. In the present example the objective lens 9 has such a shape that the optical system need not be provided with a collimator lens. A divergent scanning beam emitted by the radiation source is reflected along the beam axis 10 by the plate 5, after which it is focused by means of the objective lens 9 to form a scanning spot V in an information plane of a disc-shaped record carrier 13, for example a Compact Disc. During operation the scanning beam is reflected from the information surface 11 and, as the record carrier 13 is rotated about its axis of rotation, it is modulated in conformity with the information stored in the information track to be read. The radiation beam returning via the plate 5 passes through a prism 14 which transmits the modulated beam to a radiation-sensitive detection system 15. This detection system supplies an electric signal which is modulated in conformity with the information stored in the track to be read. Alternatively, the detection system may supply signals which are representative of deviations in the position of the radiation spot relative to a track to be read and/or of focus errors.

The holder 7, which has a longitudinal axis 7a, is movably supported relative to the frame 1 by means of two parallel blade springs 17 and 18. The blade springs 17 and 18 each have one end secured to the holder and another end to a plastics intermediate member 19. The intermediate member 19 is secured to the frame 1 by means of bolts 21. The annular holder 7 which is made of a plastics has a cylindrical portion 23 carrying an annular coil 25. The coil 25 cooperates via an air gap with an annular radially magnetized magnet 27 which is secured in a ferromagnetic cylindrical element 29 secured to the frame 1. The coil 25, the magnet 27 and the element 29 constitute an actuator for moving the objective lens 9 in the focusing direction, the holder 7 being capable of performing limited movements along its longitudinal axis 7a when the coil 25 is energized, which movements are referred to as focusing movements.

The holder 7 has a spherical supporting surface 31 to which the objective lens 9 is secured. For this purpose the objective lens 9, which has an optical axis 9a is provided with a supporting ring 33, which is cemented to the supporting surface 31 by means of an adhesive. The lens 9 and the supporting ring 33 may be constructed as a single plastics part. The supporting surface 31 of the holder 7 is constituted by an integral thin-walled spherical segment 35 of the holder 7 and has a central window 37 which also serves as the aperture for the lens 9.

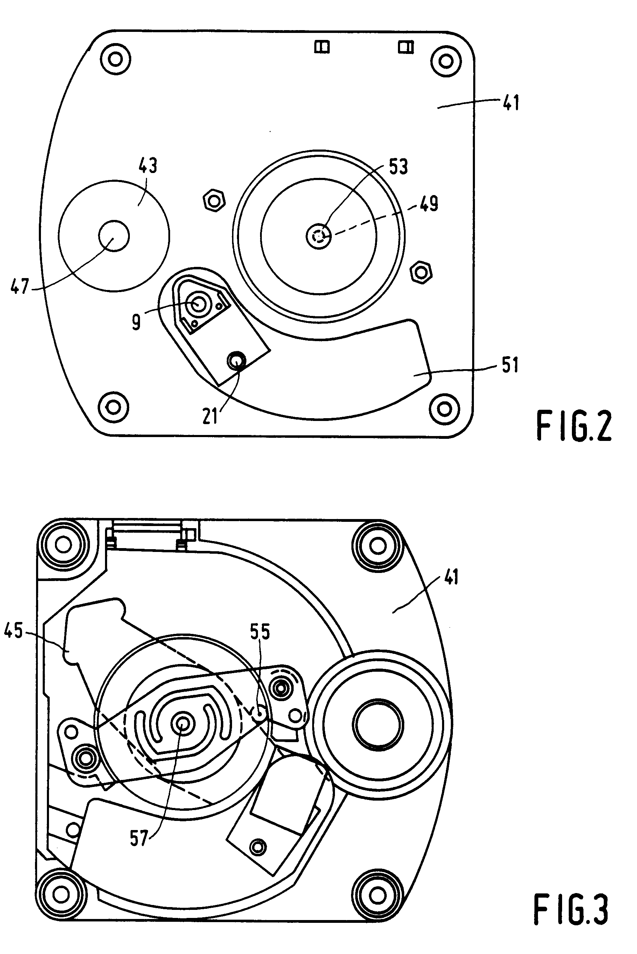

The apparatus in accordance with the invention shown in Figs. 2 and 3 comprises a chassis 41. Supporting a drive spindle 47 which carries a turntable 43 for the record carrier 13 and a pivotal arm to which the scanning unit shown in Fig. 1 is secured. The turntable 43 is rotatable about an axis of rotation 47 which extends parallel to a pivotal axis 49 about which the pivotal arm 45 is pivotable to a limited extent. When the pivotal arm 45 is pivoted the scanning unit secured to the pivotal arm 45 is movable in a slot 51 formed in the chassis 41, the objective lens 9 being movable for tracking purposes between an inner and an outer track of the disc-shaped record carrier for the purpose of tracking. The pivotal arm 45, which is arranged in a tracking control loop is pivotally supported by means of a support 53 mounted in the chassis 41 and a support 57 secured to the chassis via a blade spring 55. For a comprehensive description of the pivotal arm 45 and the drive of this arm reference is made to United States Patent Specification 4,679,185 (herewith incorporated by reference).

As a result of various minor deviations which arise during manufacture of the apparatus and in the scanning unit in accordance with the invention the longitudinal axis 7a of the holder 7 will generally not extend exactly perpendicularly to the underside, which faces the objective lens 9, of an optical disc placed on the supporting surface of the turntable 43. The deviations arising during manufacture may concern inter alia warping of the chassis, an oblique position of the axis of rotation of the turntable, a mutual offset of the blade springs carrying the holder for the objective lens, and an oblique position of the pivotal axis of the pivotal arm. It is found that in general the longitudinal axis 7a of the holder 7 exhibits a small tilting angle relative to the normal to that side 13a of the record carrier 13 which faces the objective lens 9, the tilting point being generally situated with a small range around the point Z indicated in Fig. 1.

During manufacture of the apparatus in accordance with the invention shown in Figs. 2 and 3 a diecast chassis 41 is used in which the turntable 43 and the pivotal arm 45 should be mounted as accurately as possible. After this the frame 1 of the scanning unit shown in Fig. 1 which already accommodates the radiation source 3, the birefringent plate 5, the prism 14, the detection system 15, the magnet 27 and the cylindrical element 29 and to which the holder 7 and the blade springs 17 and 18 have already been secured, is mounted on one end of the pivotal arm 45. Subsequently the objective lens 9 is placed on the spherical supporting surface 31 of the holder 7, the centre of curvature coinciding of said supporting surface with the predetermined point Z on the longitudinal axis 7a of the holder 7. By shifting the objective lens 9 over the supporting surface 31, which is amply dimensioned for this purpose, the lens is aligned in such a way that the optical axis 9a is perpendicular to the side 13a of the record carrier 13 which faces the objective lens 9. Subsequently, the supporting ring 33 of the objective lens 9 is permanently connected to the supporting surface 31 by means of an adhesive layer 59. This provides a scanning unit in which the optical axis 9a of the objective lens 9 is not only very accurately perpendicular to the side 13a of the record carrier 13 but is also situated on or very close to the beam axis 10 of the scanning beam.

It is obvious that the invention is not limited to the embodiments disclosed herein. For example, within the scope of the invention it is possible to secure the scanning unit to a tranlatable tracking mechanism comprising a slide instead of a pivotal arm.

## Claims

1. An optical scanning unit for scanning an information track in an optically readable record carrier (13), which scanning unit comprises a frame (1) and an optical system (3, 5, 9) for focusing a radiation beam produced by a radiation source (3) to form a scanning spot on a record carrier (13) and to image the scanning spot on a radiation-sensitive detection system (15), which optical system comprises a holder (7) which is movable relative to the frame and which has a central longitudinal axis (7A) and an objective lens (9), which is secured to a supporting surface (31) of the holder and which has an optical axis (9A) which extends at least substantially parallel to the beam axis of the radiation beam, characterized in that the supporting surface (31) of the holder which faces the objective lens is spherically curved, the centre of curvature (Z) being situated at that side of the supporting surface which is remote from the objective lens and being situated at least substantially on said longitudinal axis (7A) of the holder.

2. A scanning unit as claimed in Claim 1, characterized in that the holder is provided with a thin-walled spherical segment (35) to form said supporting surface (31).

3. A scanning unit as claimed in Claim 2, characterized in that the holder (7) and the segment (35) form one injection-moulded product.

4. A scanning unit as claimed in Claim 2 or 3, characterized in that the segment (35) has a central window (37) to form an aperture for the lens.

5. A scanning unit as claimed in Claim 1, 2, 3 or 4, characterized in that the objective lens (9) is provided with a cylindrical collar (33) which is connected to the spherically curved supporting surface (31) by adhesive means.

6. A scanning unit as claimed in Claim 1, 2, 3, 4 or 5, characterized in that the centre of curvature (Z) of the supporting surface (31) is situated at least in the proximity of a virtual tilting point of the holder, which is determined with the aid of a reference plate which is related to the record carrier to be scanned.

7. A scanning unit as claimed in any one of the preceding Claims, characterized in that the spherically curved supporting surface (31) of the holder has dimensions which are large enough to enable the objective lens (9) to be brought into a desired position by shifting it over the supporting surface during manufacture of the scanning unit.

8. An apparatus for writing and/or reading an information track in an optically readable record carrier (13), which apparatus comprises a drive spindle (47) for the disc-shaped record carrier (13) and a tracking mechanism to which the scanning unit as claimed in any one of the Claims 1 to 7 is secured.

9. A method of manufacturing the optical scanning unit as claimed in any one of the Claims 1 to 7, in which the radiation source (3) and the radiation-sensitive detection system (15) are fixedly secured to the frame (1) and the holder (7) for the objective lens (9) is movably secured to the frame, characterized in that after the holder (7) has been connected to the frame (1) the objective lens (9) is placed on the spherically curved surface (31), after which the objective lens (9) by shifting it over the supporting surface to align said lens relative to a reference plane which is related to the position of the record carrier to be scanned, and is subsequently secured by means of an adhesive.

10. A method of manufacturing the apparatus as claimed in Claim 8, in which the radiation source (3) and the radiation-sensitive detection system (15) are fixedly secured to the frame (1) of the scanning unit and the holder (7) for the objective lens (9) is movably secured to said frame and in which the frame (1) of the scanning unit is secured to the tracking mechanism which is supported in a chassis (41) of the apparatus,the drive spindle (47) also being supported in said chassis, characterized in that after the frame (1) of the scanning unit has been connected to the chassis (41) of the apparatus and the holder (7) has been connected to the frame (1) the objective lens (9) is placed on the spherically curved surface (31), after which the objective lens (9) is shifted over the supporting surface (31) to align said lens relative to a reference plane which is related to the position of the record carrier to be scanned, and is subsequently secured by means of an adhesive.

## Patentansprüche

1. Optische Abtasteinheit zum Abtasten einer Informationsspur in einem optisch auslesbaren Aufzeichnungsträger (13), wobei diese Abtasteinheit ein Gestell (1) und ein optisches System (3, 5, 9) zum Fokussieren eines von einer Strahlungsquelle (3) gelieferten Strahlungsbündels zu einem Abtastflecken auf einem Aufzeichnungsträger (13) und zum Abbilden des Abtastfleckens auf einem strahlungsempfindlichen Detektionssystem (15) aufweist, wobei dieses optische System eine gegenüber dem Gestell bewegliche Halterung (7) mit einer zentralen Längsachse (7A), sowie eine auf einer Auflegefläche (31) der Halterung befestigte Objektivlinse (9) mit einer optischen Achse (9A) aufweist, die sich im wenigstens wesentlichen parallel zu der Strahlungsachse des Strahlungsbündels erstreckt, dadurch gekennzeichnet, daß die gegenüber der Objektivlinse liegende Auflegefläche (31) der Halterung kugelig gekrümmt ist, wobei die Krümmungsmitte (2) sich auf der von der Objektivlinse abgewandten Seite der Auflegefläche befindet und wenigstens nahezu auf der genannten Längsachse (7A) der Halterung liegt.

2. Abtasteinheit nach Anspruch 1, dadurch gekennzeichnet, daß die Halterung mit einem angegossenen dünnwandigen Kugelsegment (35) versehen ist zum Bilden der genannten Auflegefläche (31).

3. Abtasteinheit nach Anspruch 2, dadurch gekennzeichnet, daß die Halterung (7) und das Segment (35) ein nach dem Spitzgußverfahren erzeugtes Produkt bilden.

4. Abtasteinheit nach Anspruch 2 oder 3, dadurch gekennzeichnet, daß das Segment (35) ein zentrales Fenster (37) aufweist zum Bilden einer Apertur für die Linse.

5. Abtasteinheit nach Anspruch 1, 2, 3 oder 4, dadurch gekennzeichnet, daß die Objektivlinse (9) mit einem zylinderförmigen Auflegering (33) versehen ist, der durch einen Kleber an der spärisch gekrümmten Auflegefläche (31) befestigt ist.

6. Abtasteinheit nach Anspruch 1, 2, 3, 4 oder 5, dadurch gekennzeichnet, daß die Krümmungsmitte (Z) der Auflegefläche (31) wenigstens in der Nähe eines virtuellen Kippunktes der Halterung liegt, die durch eine Bezugsebene bestimmt wird, die dem abzutastenden Aufzeichnungsträger zugeordnet ist.

7. Abtasteinheit nach einem der vorstehenden Ansprüche, dadurch gekennzeichnet, daß die kugelig gekrümmte Auflegefläche (31) der Halterung ausreichend groß bemessen ist um bei der Fertigung der Abtasteinheit die Objektivlinse (9) durch verschiebung über die Auflegefläche in eine erwünschte Lage zu bringen.

8. Anordnung zum Einschreiben und/oder Auslesen einer Informationsspur in einem optisch auslesbaren Aufzeichnungsträger (13), wobei diese Anordnung mit einer Antriebsspindel (47) für den scheibenförmigen Aufzeichnungsträger (13) und mit einem Spurfolgemechanismus versehen ist, an dem die Abtasteinheit nach einem der Ansprüche 1 bis 7 befestigt ist.

9. Verfahren zum Herstellen der optischen Abtasteinheit nach einem der Ansprüche 1 bis 7, der Anordnung, wobei die Strahlungsquelle (3) und das strahlungsempfindliche Detektionssystem (15) ortsfest und die Halterung (7) für die Objektivlinse (9) ortsbeweglich am Gestell (1) befestigt werden, dadurch gekennzeichnet, daß nachdem die Halterung (7) mit dem Gestell (1) verbunden ist, die Objektivlinse (9) auf die kugelig gekrümmte Oberfläche (31) gelegt wird, wonach die Objektivlinse (9) durch Verschiebung über die Auflegefläche gegenüber einer der Lage des abzutastenden Aufzeichnungsträgers zugeordneten Bezugsebene ausgerichtet und danach festgeklebt wird.

10. Verfahren zum herstellen der Anordnung nach Anspruch 8, wobei die Strahlungsquelle (3) und das strahlungsempfindliche Detektionssystem (15) ortsfest und das gestell (1) der Abtasteinheit und die Halterung (7) für die Objektivlinse (9) ortsbeweglich an dem genannten Gestell befestigt werden, und wobei das Gestell (1) der Abtasteinheit am Spurfolgemechanismus befestigt ist, der in einem Chassis (41) der Anordnung vorgesehen ist, wobei die Antriebsspindel (47) ebenfalls in dem genannten Chassis vorgesehen ist, dadurch gekennzeichnet, daß nachdem das Gestell (1) der Abtasteinheit an dem Chassis (41) der Anordnung und die Halterung (7) mit dem Gestell (1) verbunden ist, die Objektivlinse (9) auf die kugelig gekrümmte Oberfläche (31) gelegt wird, wonach die Objektivlinse (9) durch Verschiebung über die Auflegefläche (31) gegenüber einer der Lage des abzutastenden Aufzeichnungsträgers zugeordneten Bezugsebene ausgerichtet und danach festgeklebt wird.

## Revendications

1. Unité d'exploration optique pour explorer une piste d'information d'un support d'enregistrement à lecture optique (13), unité d'exploration comportant un châssis (1) et un système optique (3, 5, 9) pour focaliser un faisceau de rayonnement, émis par une source de rayonnement (3), en un spot d'exploration sur un support d'enregistrement (13) et pour former une image du spot d'exploration sur un système de détection (15) sensible au rayonnement, système optique comportant un support (7) pouvant être déplacé par rapport au châssis et présentant un axe longitudinal central (7A) et une lentille d'objectif (9) fixé à une surface d'appui (31) du support et présentant un axe optique (9A) s'étendant au moins à peu près parallèlement à l'axe du faisceau de rayonnement, caractérisé en ce que la surface d'appui (31) du support situé du côté de la lentille d'objectif est courbée en sphère le centre de courbure (z) étant situé, d'une part, du côté de la surface d'appui qui est à l'opposé de la lentille d'objectif et, d'autre part, au moins sensiblement sur ledit axe longitudinal (7A) du support.

2. Unité d'exploration selon la revendication 1, caractérisée en ce que le support est muni d'un segment sphérique à paroi mince (35) pour former ladite surface d'appui (31).

3. Unité d'exploration selon la revendication 2, caractérisée en ce que le support (7) et le segment (35) sont d'une seule pièce venue de moulage par injection.

4. Unité d'exploration selon la revendication 2 ou 3, caractérisée en ce que le segment (35) présente une fenêtre centrale (37) pour former une ouverture pour la lentille.

5. Unité d'exploration selon la revendication 1, 2, 3 ou 4, caractérisée en ce que la lentille d'objectif (9) est munie d'un collet cylindrique (33) relié par une colle à la surface d'appui courbée en sphère (31).

6. Unité de balayage selon la revendication 1, 2, 3, 4 ou 5, caractérisée en ce que le centre de courbure (z) de la surface d'appui (31) est situé au moins à proximité du point de basculement virtuel du support, point qui est déterminé à l'aide d'un plan de référence lié au support d'enregistrement devant être exploré.

7. Unité de balayage selon l'une quelconque des revendications précédentes, caractérisée en ce que la surface d'appui courbée en sphère (31) du support a des dimensions suffisamment grandes pour permettre d'amener la lentille d'objectif (9) dans une position souhaitée en la déplaçant sur la surface d'appui au cours de la fabrication de l'unité d'exploration.

8. Dispositif d'écriture et/ou de lecture d'une piste d'information d'un support d'enregistrement à lecture optique (13), comportant un arbre d'entraînement (47) du support d'enregistrement en forme de disque (13) et un mécanisme de suivi de piste auquel est fixée l'unité d'exploration selon l'une quelconque des revendications 1 à 7.

9. Procédé de fabrication de l'unité d'exploration optique selon l'une quelconque des revendications 1 à 7, suivant lequel le procédé de fabrication de l'unité d'exploration optique, suivant lequel la source de rayonnement (3) et le système de détection sensible au rayonnement (15) sont fixés rigidement au châssis (1) et le support (7) de la lentille d'objectif (9) est fixé libre en mouvement au châssis, caractérisé en ce que, après la fixation du support (7) au châssis (1), on met en place la lentille d'objectif (9) sur la surface courbée en sphère (31), après quoi, on déplace la lentille d'objectif (9) sur la surface d'appui de façon à l'aligne par rapport à un plan de référence lié à la position du support d'enregistrement devant être explorée pour la fixer ensuite au moyen d'une colle.

10. Procédé de fabrication du dispositif selon la revendication 8, suivant lequel la source de rayonnement (3) et le système de détection sensible au rayonnement (15) sont fixés rigidement au châssis (1) de l'unité d'exploration et le support (7) pour la lentille d'objectif (9) est fixé libre en mouvement audit châssis et dans lequel le châssis (1) de l'unité d'exploration est fixé au mécanisme de suivi de piste appuyé dans un châssis (41) du dispositif, châssis dans lequel est également appuyé l'arbre d'entraînement (47), caractérisé en ce que, après l'établissement de la liaison du châssis (1) de l'unité d'exploration au châssis (41) du dispositif et de la liaison du support (7) au châssis (1), on met en place la lentille d'objectif (9) sur la surface courbée en sphère (31), après quoi on déplace la lentille d'objectif (9) sur la surface d'appui (31) de façon à aligner cette lentille par rapport à un plan de référence lié à la position du support d'enregistrement devant être explorée pour la fixer ensuite au moyen d'une colle.
